# EUROPÄISCHE PATENTSCHRIFT

(11) **EP 1 856 222 B1**
(45) Veröffentlichungstag und Bekanntmachung des Hinweises auf die Patenterteilung: **04.05.2011**
(21) Anmeldenummer: 06706785.0
(22) Anmeldetag: 09.02.2006
(51) Int. Cl.: C09J 131/04, C09J 7/04, C08F 2/44

(54) **GUMMIERKLEBSTOFF AUF BASIS EINER FÜLLSTOFFHALTIGEN POLYMERDISPERSION**
GUM ADHESIVE BASED ON A FILLED POLYMER DISPERSION
COLLE POUR GOMMAGE A BASE D'UNE DISPERSION POLYMERE CONTENANT UNE CHARGE

(30) Priorität: 08.03.2005 DE 102005010446
(43) Veröffentlichungstag der Anmeldung: 21.11.2007
(73) Patentinhaber: Henkel AG & Co. KGaA, 40589 Düsseldorf (DE)
(72) Erfinder: SOMMER, Oliver, 32457 Porta Westfadedede (DE); BUXHOFER, Horst, 40699 Erkrath (DE); DE CALMES, Nicolas, F-62000 Dainville (FR); GOSSEN, Ralf, 47239 Duisburg (DE); KOTTHOFF, Sebastian, 32457 Porta Westfalica (DE); WOLTER, Hans-Jürgen, 32469 Petershagen (DE); ABRAHAMS-MEYER, Ethel, 41747 Viersen (DE)
(86) Internationale Anmeldenummer: PCT/EP2006/001150
(87) Internationale Veröffentlichungsnummer: WO 2006/094594

(56) Entgegenhaltungen:
- EP-A- 0 879 864
- WO-A-00/27943
- WO-A-98/11171
- PATENT ABSTRACTS OF JAPAN Bd. 2002, Nr. 11, 6. November 2002 (2002-11-06) & JP 2002 188069 A (SHOWA HIGHPOLYMER CO LTD; NIPPON SHIKAN KOGYO KK), 5. Juli 2002 (2002-07-05)
- DATABASE WPI Section Ch, Week 198222 Derwent Publications Ltd., London, GB; Class A14, AN 1982-44863E XP002379418 & JP 57 067608 A (AIKA KOGYO KK) 24. April 1982 (1982-04-24)

## Beschreibung

Die Erfindung betrifft einen füllstoffhaltigen Gummierklebstoff auf Basis einer mit Schutzkolloiden stabilisierten Polymerdispersion, wobei diese in Gegenwart von organischen oder anorganischen Füllstoffpartikeln polymerisiert wurde.

Aus der DE 199 51 803 ist ein Klebstoff auf Basis einer Polyvinylacetatdispersion bekannt, der als Gummierklebstoff eingesetzt wird. Es handelt sich dabei jedoch um einen Klebstoff, der aus einer stabilisierten PVAc-Dispersion besteht und ein Schutzkolloid auf Basis nicht-ionischer Stärkeether sowie Polyvinylalkohol und mindestens einen grenzflächenaktiven Stoff enthält. Insbesondere wird die positive Wirkung des Polyvinylalkohols bei der Polymerisation beschrieben. Weiterhin können noch verschiedene dispergierte oder gelöste Additive zugesetzt werden. Der Zusatz von Pigmenten oder Füllstoffen wird nicht beschrieben.

Weiterhin ist aus der DE 33 23 851 bekannt, dass Klebstoffe auf Basis einer wässrigen Polymerdispersion, hergestellt aus Vinylestern und weiteren ethylenisch ungesättigten Verbindungen in Gegenwart von Stärkeethern als Schutzkolloid, eingesetzt werden können. Die Polymerisation in Gegenwart von Pigmenten oder Füllstoffen wird nicht beschrieben. Es werden hochviskose Dispersionen beschrieben, die auch in Knetern verarbeitet werden können. Diese Dispersionen werden zur Herstellung von redispergierbaren Kleisterpulvern verwendet. Eine Verwendung als wiederbenetzbarer Gummierklebstoff ist nicht beschrieben.

Weiterhin ist in der DE 199 59916 eine Polymerdispersion bekannt, die als Klebstoff in der Möbelherstellung oder als Oberflächenbeschichtungsmittel eingesetzt werden kann. Es handelt sich dabei um eine füllstoffhaltige Polymerdispersion, bei oder mindestens ein organisches Polymer in Gegenwart von Füllstoffpartikeln polymerisiert wird, die ein bestimmtes Verhältnis der Teilchengrößen von Füllstoff partikeln zu Polymerpartikeln aufweist. Das Polymer wird in Gegenwart eines weiteren wasserlöslichen Polymeren polymerisiert, wobei insbesondere Polyvinylalkohole eingesetzt werden. Die Beispiele weisen als Schutzkolloid nur Polyvinylalkohol auf. Eine Verwendung dieser Polymerdispersionen als wiederbenetzbare Gummierklebstoffe wird nicht beschrieben.

Eine Anforderung an Gummierklebstoffe ist die, dass diese im wesentlichen mit kostengünstig verfügbaren Rohstoffen hergestellt werden sollen, wobei die geforderten Eigenschaften wie Blockverhalten, Glanz, Abbindezeit nach Wiederbefeuchtung erhalten bleiben müssen. Nachteile durch Abmischen von Polymerpartikeln und Füllstoffen im Bereich der Gummierklebstoffe zeigen sich dadurch, dass die getrockneten Klebstoffschichten uneben werden und den geforderten Glanz verlieren. Weiterhin sollen solche Klebstoffe mit lebensmittelrechtlich zugelassenen Bestandteilen erstellt werden. Außerdem ist es schwierig, Polymerdispersionen mit Pigmenten oder Füllstoffen in eine lagerstabile Form zu überführen.

Aufgabe der vorliegenden Erfindung ist es deswegen, einen Gummierklebstoff zur Verfügung zu stellen, der die notwendigen Eigenschaften eines Gummierklebstoffs wie Blockfestigkeit, Planlage, gute Verarbeitbarkeit, Glanz, Abbindezeit nach Wiederbefeuchtung aufweist, kostengünstig herzustellen ist sowie eine lagerstabile Dispersionsform aufweist.

Die Aufgabe wird gelöst durch einen Gummierklebstoff enthaltend eine wässrige füllstoffhaltige Polymerdispersion umfassend Wasser, mindestens einen Füllstoff, mindestens ein (Co)Polymeres auf Basis von olefinisch ungesättigten Monomeren, dadurch gekennzeichnet, dass das (Co)Polymere in Gegenwart eines Stärkeetherderivats und/oder Celluloseetherderivats als Schutzkolloid in Gegenwart des Füllstoffs polymerisiert wurde.

Unter Gummierung wird die Beschichtung eines Trägermaterials mit einem wasserreaktivierbaren Klebstoff verstanden. Das Trägermaterial ist in der Regel ein wasseraufsaugendes Produkt, insbesondere aus Papier oder Pappe. Es kann z.B. als Briefmarke, als Briefumschlag, als Etikett, als klebender Streifen usw. eingesetzt werden. Auf das Trägermaterial wird der Gummierklebstoff in flüssiger Form appliziert und unmittelbar getrocknet. Dabei verliert er seine Klebrigkeit. Erst beim Anfeuchten mit Wasser wird er wieder klebrig. Die Gummierklebstoffe basieren üblicherweise auf z.B. Glutin oder Stärkederivaten (Dextrin). Aber auch Klebstoffe auf Basis vollsynthetischer Polymere sind bekannt, z.B. aus Polyvinylalkohol oder Polyvinylacetat.

Gegenstand der Erfindung ist eine Klebstoffdispersion zur Verwendung als Gummierklebstoff, bei der das Polymere in Gegenwart von Füllstoffen und Schutzkolloiden hergestellt wird. Ein weiterer Gegenstand der Erfindung ist ein Verfahren zur Herstellung von stabilen wässrigen füllstoffhaltigen Klebstoffdispersionen durch radikalische Polymerisation von Monomeren in Gegenwart von Füllstoffen.

Die erfindungsgemäße Klebstoffdispersion enthält anorganische Füllstoffe und/oder organische Füllstoffe ggf. auch Gemische von verschiedenen Füllstoffen. Als Füllstoffe eignen sich im Rahmen der vorliegenden Erfindung alle organischen oder anorganischen Füllstoffe, die eine Partikelgröße von etwa 0,05 bis etwa 10 µm, beispielsweise 0,1 bis 5 µm, oder 0,2 bis 4 µm. Unter Füllstoffen sind ggf. auch farbige Pigmente zu verstehen, solange diese in der Wasserphase nicht löslich sind.

Unter den Begriffen "Teilchengröße" oder "Partikelgröße", wird im Rahmen der vorliegenden Erfindung der üblicherweise als "d50" bezeichnete Wert verstanden, d. h. der Wert, bei dem etwa 50 % der Partikel einen kleineren Durchmesser und etwa 50 % der Partikel einen größeren Durchmesser aufweisen. Zur Bestimmung dieses Werts werden Messverfahren eingesetzt, die auf dem Prinzip der Lichtbeugung ruhen. Die angegebenen Daten für Teilchengrößen beziehen sich auf Messungen mit dem Gerät MASTERSIZER 2000, von der Firma Malvern Instruments.

Als Füllstoffe eignen sich im Rahmen der vorliegenden Erfindung beispielsweise anorganische Stoffe, die gegenüber dem organischen Polymeren sowie während des Herstellungsprozesses der füllstoffhaltigen Polymerdispersion unter den dort herrschenden Reaktionsbedingungen inert sind. Beispiele für geeignete anorganische Materialien sind Aluminiumsilikate, beispielsweise Andalusit, Sillimanit, Kyanit, Mullit, Pyrophyllit oder Imogolit. Weiterhin geeignet sind Verbindungen auf der Basis von Natriumaluminium- oder Calciumsilikaten. Ebenfalls geeignet sind Mineralien wie Kieselerde, Quarzmehl, Kieselgel, Bariumsulfat, Metalloxide wie Zinkoxid, Titandioxid, Zeolithe, Kaophilit, Leucit, Kalifeldspat, Biotit, die Gruppe der Soro-, Cyclo-, Ino-, Phyllo- und Tectosilikate, die Gruppe der schwer löslichen Sulfate, wie Gips, Anhydrit oder Schwerspat, sowie Calciummineralien wie Talkum oder Kreide. Die genannten anorganischen Materialien können im Rahmen der vorliegenden Erfindung einzeln, d. h. als einzige Art von Füllstoffpartikeln eingesetzt werden. Es ist jedoch ebensogut möglich, ein Gemisch aus zwei oder mehr der genannten Füllstoffpartikel einzusetzen.

Weiterhin sind als Füllstoffe im Rahmen der vorliegenden Erfindung organische Füllstoffe in fester Partikelform geeignet, in deren Gegenwart die Polymerisation ablaufen kann. Geeignete organische Füllstoffe sind beispielsweise Polyvinylacetat und Copolymere; Polystyrol und Copolymere; Polyolefine auf Basis von Ethylen, Propylen, Buten; Polyacrylnitril, Poly(meth)acrylatester, Polydialkylmaleinate und deren Copolymere.

Bei einer bevorzugten Ausführungsform der Erfindung sind in der erfindungsgemäßen füllstoffhaltigen Polymerdispersion anorganische Füllstoffe wie Kreide, Gips als Anhydrit, Halbhydrat oder Dihydrat, Quarzmehl, Kieselgel, Kieselerde, Titandioxid, Talk oder Schichtsilikate enthalten.

Die im Rahmen der vorliegenden Erfindung einsetzbaren Füllstoffe können glatte, rauhe oder poröse Oberflächen aufweisen, bevorzugt weisen die Füllstoffe eine rauhe oder eine poröse Oberfläche auf.

Eine besondere Ausführungsform der Erfindung verwendet Füllstoffe, die eine plättchenförmige Form der Füllstoffpartikel aufweisen. Unter "plättchenförmig" ist zu verstehen, dass der Längs- und Querdurchmesser des einzelnen Partikelteilchens wesentlich größer als die Dicke des Teilchens sind. Beispielsweise soll das Verhältnis von Dicke : Durchmesser höchstens 1 : 3 betragen, besonders bevorzugt höchstens 1 : 10.
Die Menge der Füllstoffe in der erfindungsgemäßen Klebstoffdispersion soll 1 bis 40 Gew.% betragen, bevorzugt 5 bis 20 Gew.%

Ein weiterer notwendiger Bestandteil der erfindungsgemäßen füllstoffhaltigen Polymerdispersion ist das Schutzkolloid, in dessen Gegenwart zusammen mit dem Füllstoff das nicht wasserlösliche Polymere polymerisiert wird. Es handelt sich dabei um Stärkeether und/oder Celluloseether oder deren Derivate, z.B. modifiziert durch Oxidation, Veresterung, Veretherung, Abbau. Beispiele sind Hydroxyalkyletherstärken, Hydroxyalkylcellulosen, Carboxyalkylcellulosen, Carboxyalkyletherstärken, Dextrine oder Hydroxyalkyldextrine. Diese können einzeln oder im Gemisch eingesetzt werden. Insbesondere geeignet sind nichtionische Schutzkolloide, darunter bevorzugt Stärkederivate.

Als nichtionische Stärkederivate kommen insbesondere Hydroxyalkyletherstärken in Frage, z.B. Hydroxyethyl-, Hydroxypropyl- und Hydroxybutyletherstärken. Die Alkyl-Gruppen enthalten im allgemeinen 2 bis 8, insbesondere 2 bis 4'C-Atome Als Ausgangsprodukte für die genannten Stärkederivate lassen sich sowohl native Stärken als auch abgebaute, z.B. durch saure Hydrolyse abgebaute Stärken, wie Dextrine, einsetzen. Die Wahl des Ausgangproduktes kann in weiten Grenzen variieren. So können praktisch alle Stärken pflanzlicher Herkunft eingesetzt werden, z.B. solche aus Mais, Weizen, Kartoffeln, Tapioka, Reis, Sago und Hirse. Der Substitutionsgrad der OH-Gruppen ist nicht entscheidend für die Erfolge des Verfahrens, so genügen vielfach solche bis ca. 2, es kann aber auch eine höhere Anzahl der OH-Gruppen pro Zuckereinheit umgesetzt werden. Solche Produkte sind kommerziell erhältlich und können vom Fachmann nach ihren Eigenschaften ausgewählt werden.

Weiterhin kann auch Polyvinylalkohol als zusätzlicher Bestandteil in einer Menge von 0 bis 20 Gew.-% als weiteres Schutzkolloid in der Dispersion während der Polymerisation enthalten sein. Erfindungsgemäß ist es jedoch bevorzugt, den Gehalt gering zu halten. Besonders bevorzugt ist die Klebstoffdispersion frei von Polyvinylalkohol. Auch in späteren Verfahrensschritten soll kein Polyvinylalkohol dem Klebstoff zugesetzt werden.

Vorzugsweise werden nichtionische Stärkeether als einzige Schutzkolloide eingesetzt, und zwar in einer Menge von 0,5 bis 35 Gew.-%, bevorzugt 3 bis 30 Gew.-%, insbesondere 7 bis 30 Gew.-%, bezogen auf die Klebstoffdispersion.

Erfindungsgemäß ist in der Klebstoffdispersion ein (Co)polymerisat aus olefinisch ungesättigten Monomeren enthalten, das durch Polymerisation in Gegenwart des Füllstoffs erhalten wird. Insbesondere sind dabei eigenständig wasserunlösliche (Co)polymere geeignet, die durch radikalische Polymerisation von ungesättigten Monomeren erhältlich sind, wie z.B. Vinylester-Polymere als Homopolymere oder Copolymere, Polyacrylsäureester oder Polymethacrylsäureester oder Copolymere. Es können verschiedene andere copolymerisierbare Monomere enthalten sein, es sollen aber keine halogenierten Monomere verwendet werden.

Als wenigstens eine ethylenisch ungesättigte Gruppe aufweisende Monomere kommen für das Copolymer radikalisch polymerisierbare Monomere in Betracht, wie beispielsweise Ethylen; vinylaromatische Monomere, wie Styrol, α- Methylstyrol oder Vinyltoluol; Ester aus Vinylalkohol und C₂ bis C₁₈ - Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure mit C₁ bis C₁₂ - Alkanolen, wie Acrylsäure- und Methacrylsäuremethyl-, -ethyl-, -n-butyl-, -iso-butyl und -2- ethylhexylester, Maleinsäuredimethylester oder Maleinsäure-di-n-butylester oder Nitrile α,β-monoethylenisch ungesättigter Carbonsäuren, wie Acrylnitril. Es können ggf. auch in geringen Mengen Monomere enthalten sein, die mindestens eine weitere funktionelle Gruppe aufweisen, wie Epoxy-, Hydroxy-, N-Methylolgruppe, oder wenigstens zwei nicht konjugierte ethylenisch ungesättigte Doppelbindungen.

Als bevorzugte (Co)polymere kommen Vinylester von solchen olefinisch ungesättigten Monomeren zur Verwendung, die durch Emulsions- oder Suspensionspolymerisation hergestellt werden können. Es handelt sich dabei beispielsweise um Vinylestermonomere aus linearen oder verzweigten C₂ bis C₁₂-Carbonsäuren. Es können Homo- oder Copolymere eingesetzt werden. Geeignete Copolymere können insbesondere aus Vinylacetat und 25 bis 50 Gew.-%, bezogen auf die Monomeren insgesamt, mindestens eines Mono- oder Di-Esters der Fumar-, Malein-, Itacon-, Croton- Acryl- und/oder Methacrylsäure, wobei die Alkylgruppe verzweigt oder unverzweigt sein kann und 4 bis 18, insbesondere 4 bis 8 C-Atome enthalten soll, bestehen. Bevorzugte Alkylgruppen sind z. B. aus Butyl und Ethylhexyl bzw. Octyl, -resten ausgewählt.

Auch Terpolymere aus den oben angegebenen Comonomeren sind brauchbar. Das dritte Comonomere wird dann in einer Menge von bis zu 10, vorzugsweise 0,1 bis zu 2 Gew.-% eingesetzt, bezogen auf die Comonomeren insgesamt.

Geeignete Verfahren zur Emulsionspolymerisation werden beispielsweise in "Comprehensive Polymer Chemistry", 4, 171-218 beschrieben oder in der DE-OS 33 23 851 . Die Polymerisation soll dabei so erfolgen, dass ein Feststoffgehalt der füllstoffhaltigen Polymerdispersion aus Polymer, Füllstoff und Schutzkolloide von 45 bis 70 Gew.-%, bevorzugt 50 bis 65 Gew.-% , insbesondere von 55 bis 60 Gew.-% erhalten wird. Insbesondere kann das Polyvinylacetat nach Verfahren der Suspensions- oder Emulsions-Polymerisation hergestellt werden, wobei die Emulsionspolymerisation bevorzugt ist. Die einzelnen Verfahrensbedingungen hierzu sind dem Fachmann allgemein bekannt.

Je nach gewünschten Eigenschaften der Polymerpartikel und der Art der Herstellung kann der Anteil der Polymeren an der gesamten Klebstoffdispersion zwischen 5 und 60 Gew.-% betragen. In einer bevorzugten Ausführungsform der Erfindung liegt der Anteil zwischen etwa 10 und etwa 35 Gew.-%.

In einer weiteren Ausführungsform der Erfindung enthält die Dispersion bis zu etwa 20 Gew.-%, bezogen auf die gesamte Klebstoffdispersion, an Zusatzstoffen. Zu den Zusatzstoffen zählen beispielsweise Stabilisatoren, Entschäumer, Antioxidantien, Photostabilisatoren, Pigmentverteiler, Benetzungsmittel, pH-Regler, Weichmacher und dergleichen. Es können auch noch Hilfsstoffe zugesetzt werden, um spezielle Anforderungen zu erfüllen, z.B. Farbstoffe, Geruchsstoffe, Biozide usw.

Beispielsweise kann der erfindungsgemäße Gummierklebstoff als Zusatzstoff noch bis zu 10, insbesondere 1 bis 5 Gew.-%, bezogen auf die Klebstoffdispersion insgesamt, mindestens eines hygroskopischen Stoffes enthalten. Darunter wird ein Stoff verstanden, der bei Lagerung unter normalen Bedingungen bis zu einem bestimmten Gleichgewicht Feuchtigkeit aus der Luft anzieht. Vorzugsweise handelt es sich dabei um organische Stoffe wie z.B. Zucker, Glycerin oder Polyethylenglykol.

Weiterhin kann der erfindungsgemäße Gummierklebstoff als Zusatzstoff noch 0,01 bis 10 Gew.-% , bezogen auf die Klebstoffdispersion insgesamt, mindestens eines grenzflächenaktiven Stoffs enthalten. Darunter werden Stoffe verstanden, die die Grenzflächenspannung zu Wasser herabsetzen, wie Entschäumer, Tenside, Benetzungsmittel. Sie enthalten in der Regel hydrophile und hydrophobe, insbesondere lipophile Gruppen. Ein Teil der grenzflächenaktiven Stoffe kann vor der Polymerisation zugesetzt werden. Diese dienen zur Benetzung, zur Vermeidung von Schaum, sowie zur Stabilisierung der allein nicht wasserlöslichen Anteile an Polymeren und Füllstoffen. Es können anionische, nichtionische oder ampholytische Tenside, oder Gemische aus zwei oder mehr davon, enthalten sein.

Beispiele für geeignete anionische Tenside sind Alkylsulfate, Alkyl- , Alkylarylether sulfate, wie Alkylphenolether-Sulfate, Fettalkohol-, Fettalkoholether-, Sulfonate, insbesondere Alkylsulfonate, Alkylarylsulfonate, Tauride, Ester und Halbester der Sulfobernsteinsäure, die gegebenenfalls ethoxyliert sein können, Alkali- und Ammoniumsalze von Carbonsäuren, beispielsweise von Fettsäuren, Phosphorsäurepartialester und deren Alkali- und Ammoniumsalze.

Beispiele für ampholytische Tenside sind langkettig substituierte Aminosäuren wie N-Alkyl-di(aminoethyl)glycin oder N-Alkyl-2-aminopropionsäuresalze, Betaine, wie N-(3-acylamidopropyl)-N,N-dimethylammoniumsalze oder Alkylimidazoliumbetaine.

Beispiele für nichtionische Tenside sind Alkylpolyglykolether, Alkylarylpolyglykolether, Fettalkoholpolyglykolether, Fettalkohol-EO/PO-Addukte und Alkylphenol-EO/PO-Addukte, Ethylenoxid/Propylenoxid (EO/PO)-Blockcopolymere, vorzugsweise solche mit etwa 8 bis etwa 50 EO- bzw. PO-Einheiten, Additionsprodukte von Alkylaminen, Fett- und Harzsäuren, Alkylpolyglykoside mit linearen oder verzweigten, gesättigten oder ungesättigten Alkylresten mit im Mittel 8 bis etwa 24 C-Atomen und einem Oligoglykosidrest, Naturstoffe und deren Derivate wie Lecithin, Lanolin oder Sarkosin, polare Gruppen enthaltende lineare Organo(poly)siloxane, insbesondere solche mit Alkoxygruppen mit bis zu 10 C-Atomen und bis zu etwa 50 EO- oder PO-Gruppen.

In einer bevorzugten Ausführungsform der Erfindung enthält die erfindungsgemäße Polymerdispersion als nichtionisches Tensid beispielsweise Nonylphenolethoxylate, Octylphenolethoxylate, C12/14-Fettalkoholethoxylate, Oleylcetylethoxylate, C16/18-Fettalkoholethoxylate, Cetylstearylethoxylate, ethoxylierte Triglyceride, Sorbitanmonolaurat, Sorbitanmonooleat, Sorbitan-30EO-monooleat, Sorbitan-30EO-monostearat oder ein Gemisch aus zwei oder mehr davon.
In einer bevorzugten Ausführungsform der Erfindung enthält die füllstoffhaltige Polymerdispersion mindestens ein anionisches oder ein nichtionisches Tensid, beispielsweise mit einem Molekulargewicht von weniger als 600.

Die erfindungsgemäße Polymerdispersion kann grenzenflächenaktive Substanzen enthalten in einer Menge von 0,1 bis zu etwa 10 Gew.-% , beispielsweise von 0,2 bis 5,0 Gew.-%, bezogen auf die gesamte Klebstoffdispersion, insbesondere 0,5 bis 4,0 Gew.-%.

Als weitere Zusatzstoffe können ggf. Weichmacher vorhanden sein, wie beispielsweise Ester wie Abietinsäureester, Adipinsäureester, Azelainsäureester, Benzoesäureester, Buttersäureester, Essigsäureester, Ester höherer Fettsäuren, Ester OH-Gruppen tragender oder epoxidierter Fettsäuren, Fettsäureester und Fette, Glykolsäureester, Phosphorsäureester, Phthalsäureester, Propionsäureester, Sebacinsäureester, Sulfonsäureester, Thiobuttersäureester, Trimellithsäureester, Zitronensäureester, Polyethylen- oder Polypropylenglykoldialkylether, wie Dimethyl- oder Diethylether von Diethylenglykol oder Dipropylenglykol, Glycerintriacetat, sowie Gemische aus zwei oder mehr davon. Besonders geeignet sind die asymmetrischen Ester der difunktionellen, aliphatischen Dicarbonsäuren.

Als Zusatzstoffe kann die erfindungsgemäße Klebstoffdispersion bis zu 2 Gew.%, vorzugsweise bis 1 Gew.-% an UV-Stabilisatoren enthalten. Als UV-Stabilisatoren besonders geeignet sind die sogenannten Hindered Amine Light Stabilisators (HALS).

Die füllstoffhaltige Polymerdispersion wird im Rahmen der vorliegenden Erfindung durch Emulsionspolymerisation hergestellt. Zu diesem Zweck wird vorzugsweise zunächst eine Dispersion der Füllstoffpartikel in Wasser erzeugt.

Dabei wird beispielsweise zunächst eine wässrige Lösung eines Tensids/ Emulgators hergestellt. Zu dieser Lösung werden dann ein oder mehrere Stärkeether- und/oder Celluloseether- oder deren Derivate zugefügt. Diese Lösung oder Dispersion wird dann homogenisiert, das kann ggf. auch durch Erwärmung unterstützt werden. '

Als nächster Verfahrenschritt wird im Rahmen dieser Ausführungsform die Dispersion der Füllstoffpartikel durchgeführt. Hierzu werden die Füllstoffpartikel in der oben genannten Lösung dispergiert, wobei die Dispersion so lange gerührt wird, bis eine möglichst weitgehende Verteilung der vorliegenden Füllstoffagglomerate erzielt wird. Die Dispergierung kann durch schnelllaufende Rührer, wie Dissolver, durchgeführt werden. Gegebenenfalls kann die Zerteilung der Agglomerate durch Beeinflussung der Temperatur, der Rührgeschwindigkeit oder das eingesetzte Tensid beeinflusst werden. Durch eine Messung der Partikelgrößenverteilung kann die vollständige Dispergierung überprüft werden. Es ist jedoch auch jede andere Form von Zerlegung eventueller Füllstoffpartikel-Agglomerate in die Primärpartikel im Rahmen des erfindungsgemäßen Verfahrens möglich. Hierzu zählt beispielsweise die Zerteilung von Agglomeraten mittels Ultraschall oder elektrokinetischer Vorgänge.

Wenn eine ausreichende Dispergierung der Füllstoffpartikel vorliegt, so wird anschließend die Emulsionspolymerisation durchgeführt. Hierzu wird beispielsweise ein Teil der Monomere zugefügt, und nach Zugabe eines Teils der Initiatoren die Polymerisation durch Erwärmen gestartet. Unter Kontrolle der Reaktionstemperatur können dann die restlichen Anteile an Monomeren und Initiatormischung zugetropft werden.

Als Polymerisationsinitiatoren für die bevorzugte radikalische wässrige Emulsionspolymerisation sind alle diejenigen geeignet, die in der Lage sind, eine radikalische wässrige Emulsionspolymerisation im Beisein des Füllstoffes auszulösen. Es kann sich dabei um organische und anorganische Initiatoren handeln, z.B. um organische Peroxide, wie tert.-Butylhydroperoxid, Cumolhydroperoxid, Butyl- oder Di-Cumylperoxid, Benzoylperoxid; um anorganische Peroxide, wie Na- oder K-Peroxodisulfat, Peroxodischwefelsäure, Wasserstoffperoxid, Natrium- oder Kaliumpercarbonat; Azoverbindungen wie Diazo-bis-isobutyroinitril oder Azo-bis(amidinopropyl)- dihydrochlorid. Ebenfalls geeignet sind Redoxinitiatoren, d. h., Systeme die aus Oxidations- und Reduktionsmitteln bestehen, z. B. Peroxosulfate/Metabisulfate, Peroxosulfate/Thiosulfate oder organische Peroxide/Thiosulfate.

Im Rahmen einer bevorzugten Ausführungsform der Erfindung werden als wasserlösliche Polymerisationsinitiatoren Wasserstoffperoxid, Natriumpersulfat, Kaliumpersulfat oder Ammoniumpersulfat eingesetzt. Die Menge an eingesetztem Polymerisationsinitiator liegt in der Regel bei 0,05 bis 2,0 Gew.-%, bezogen auf die füllstoffhaltige Polymerdispersion.

Um eine vollständige Reaktion zu erhalten und den Gehalt an Restmonomeren zu vermindern, kann in einer Ausführungsform nach dem Ende der Reaktion zusätzlich ein ggf. auch unterschiedlicher Initiator zugesetzt werden und durch erhöhte Temperatur noch eine Nachreaktion durchgeführt werden.

In die so hergestellte füllstoffhaltige Polymerdispersion können entweder nach dem Abkühlen oder in der Wärme weitere Zusatzstoffe zugefügt werden. Diese können zur Beeinflussung bestimmter Eigenschaften des fertigen Gummierklebstoffs ausgewählt werden.

Gemäß dem Herstellungsverfahren erhält man eine lagerstabile Dispersion, die als Gummierklebstoff verwendet werden kann. Die erfindungsgemäße Klebstoffdispersion soll eine Viskosität unter 15000 mPas aufweisen, insbesondere zwischen 2000 bis 7500 mPas gemessen nach ISO 2555, Brookfield RVT, Spindel 4, 25 °C. Diese Dispersion soll über einen Zeitraum von 8 Wochen lagerstabil sein, d. h. es sollen sich keine abgesetzten (Fülllstoff)Partikel am Boden befinden.

Der erfindungsgemäße Gummierklebstoff zeichnet sich durch eine schnelle Trocknung bei dem Auftragen auf das Substrat aus. Überraschend ist, dass er einen glänzenden Film ergibt. Dieser hat eine gute Blockfestigkeit und zeigt ein schnelles Aktivieren - selbst bei Trocknungs-Temperaturen von mehr als 160 °C - nach der Befeuchtung sowie danach eine intensive Verklebung.

Die erfindungsgemäße Gummierklebstoffdispersion besitzt eine geeignete Viskosität und dabei eine gute Verarbeitbarkeit. Bei der Weiterverarbeitung der beschichteten Substrate weist die aufgetragene Klebstoffschicht eine gute Betriebssicherheit in Kuvertierautomaten beim Verschließen von Briefumschlägen, da er schnell durch Befeuchtung zu aktivieren ist. Die übrigen Eigenschaften werden nicht verschlechtert. Die Planlage eines Prüfpapiers mit einem 40 µm dicken Klebstoff-Film ist gut.

Die Erfindung wird nun anhand von Beispielen im einzelnen erläutert:
Die Eigenschaften wurden folgendermaßen ermittelt:
   - Die Viskosität wurde nach Brookfield gemäß ISO 2555 unter folgenden Bedingungen gemessen: RVT, Spindel 4, 20 Umdrehungen/min, 25 °C.
   - Der Festkörpergehalt wurde gemäß DIN 53189, Verfahren C, nach 3 Stunden bei 105 °C durch Auswiegen bestimmt.
   - Ein 40 µm dicker Film wird auf Briefpapier aufgetragen und bei Raumtemperatur getrocknet. Der bei Raumtemperatur getrocknete Klebstoff-Film wird zusätzlich für 10 sec. Temperaturen von 150 bis 200 °C ausgesetzt.
Zur Bestimmung der Benetzbarkeit wurde der Klebstoff-Film mit einem feuchten Schwamm überstrichen und das Benetzungsverhalten visuell beurteilt.
   - Um die beginnende Verblockung zu bestimmen, werden mit einem Rakel auf Schreibpapier 40 µm dicke Filme gezogen und 24 Std. unter Raumbedingungen getrocknet. Stücke des Papiers werden gestapelt, abwechselnd beschichtet und unbeschichtet. Der erhaltene Stapel sollte aus 15 beschichteten und 15 unbeschichteten Papieren bestehen und oben/ unten mit Pappe abgedeckt. Dieser Stapel wird bei 40 °C und 70 % relativer Feuchte klimatisiert gelagert und mit einem Gewicht von 1 kg belastet. Nach 48 Stunden wird das Gewicht entfernt und die Verblockung überprüft, d.h. ob die Papierstücke aneinander kleben. Ist keine Verblockung feststellbar, werden die Prüfmuster erneut bei um 5 % erhöhter Luftfeuchtigkeit und weiter 48 h gelagert. Diese Verfahrensweise wird bis zur Verblockung durchgeführt.
   - Zur Glanz-Bestimmung wird mit einem Rakel auf Papier in Papierlaufrichtung ein 40 µm starker Klebstoffstreifen aufgezogen und 24 Std. getrocknet. Es wird eine Glanzbeurteilung gegen eine Vergleichsprobe durchgeführt.

### Beispiele:

| Material | Versuch I | Versuch II | Versuch III | Versuch IV |
|---|---|---|---|---|
| 1. De-ionisiertes Wasser | 22,2 | 24,0 | 24,0 | 24,0 |
| 2. Trinatriumphosphat | 0,05 | - | - | - |
| 2.Natriumhydrogencarbonat | - | 0,05 | 0,05 | 0,05 |
| 3. AVEDEX 36 LAC14 | 22,0 | - | - | - |
| 3. Solfarex A 55 | - | 12,0 | 12,0 | 12,0 |
| 4. Disponil AES 72 | 1,0 | 2,5 | 2,5 | 2,5 |
| 4. Arkopal N 100 | - | 2,0 | 2,0 | 2,0 |
| 5. Foamaster 223 | 0,05 | 0,05 | 0,05 | 0,05 |
| 6. Omyacarb 2 GU | 10,0 | 10,0 | 10,0 | - |
| 6. Calcipore HM | 10,0 | 10,0 | 10,0 | 10,0 |
| 7. Vinylacetatmonomer | 19,0 | 19,0 | 19,0 | 19,0 |
| 8. Wasserstoffperoxid | 0,9 | - | - | - |
| 8. Kaliumpersulfat | - | 0,15 | 0,15 | 0,15 |
| 9. Natriumthiosulfat | 0,2 | - | - | - |
| 10. De-ionisiertes Wasser | 3,5 | 4,25 | 4,25 | 4,25 |
| | | | | |
| 11. Ammoniumpersulfat | 0,25 | 0,1 | - | 0,1 |
| 11. tert. Butylhydroperoxid | - | - | 0,1 | - |
| 12. De-ionisiertes Wasser | 0,15 | 0,3 | 0,3 | 0,3 |
| 13. Foamaster 223 | 0,05 | 0,05 | 0,05 | 0,05 |
| 14. Ascorbinsäure | 0,2 | 0,05 | 0,05 | 0,05 |
| 15. De-ionisiertes Wasser | 1,25 | 0,3 | 0,3 | 0,3 |
| | | | | |
| 16. Natronlauge 50% | 0,2 | - | - | - |
| 17. AVEDEX 48 MC1 4 | 4,25 | - | - | - |
| 18. AVEDEX 36 LAC 14 | 4,25 | 17,75 | 17,75 | 17,75 |
| 19. Polyglykol 200 | 0,8 | 0,75 | 0,75 | 0,75 |
| 19. Glycerintriacetat | - | 2,5 | 2,5 | 2,5 |
| 20. Zucker | 3,5 | 3,5 | 3,5 | 3,5 |
| 21. Foamaster 223 | 0,2 | 0,25 | 0,25 | 0,25 |

- Avedex 36 LAC 14: Dextrin
- Avedex 48 MC 14: Dextrin
- Solfarex A 55: Dextrin-hydroxylether
- Disponil AES 72: Tensid auf Basis Aryl/Alkylglykol-polyethersulfat
- Arkopal N 100: Tensid auf Basis ethoxilierter Phenole
- Foamaster 223: Entschäumer auf Basis Silikonumsetzungsprodukte
- Omyacarb 2 GU: Kreide (d50 2,5 µm)
- Calcipore HM: Kreide (d50 0,65 µm)

### Lösung 1:

In einem Mischbehälter werden die Komponenten 1, 4 und 5 vorgelegt und gemischt, Komponente 2 zugesetzt und in die kalte Lösung portionsweise Komponente 3 zugegeben und homogenisiert. In diese Mischung wird Komponente 6 langsam zugerührt, so dass eine ausreichende Dispergierung vollzogen wird und sich der Füllstoff nicht absetzt.
Danach wird die Mischung homogenisiert und für eine Stunde bei ca. 80 °C gerührt.

### Lösung 2:

Die Komponenten 8 und ggf. 9 werden langsam in der Kälte in das Wasser (Komponente 10) eingerührt.

### Lösung 3:

Die Komponenten 13 bis 15 werden vermischt.

### Polymerisation:

In einen vorgeheizten Reaktor wird die Lösung 1 zugegeben und erhitzt. Danach werden bei 72 - 82 °C ca. 10 % der Komponente 7 (olefinisches Monomer) zudosiert sowie 10 % der Lösung 2 (jeweils bezogen auf die Gesamtmenge). Nachdem die Polymerisationsreaktion gestartet hat, wird die Restmenge des Monomeren langsam zudosiert, parallel dazu wird die Lösung 2 ebenfalls zudosiert. Die Reaktionstemperatur wird zwischen 75 und 80 °C gehalten.

Nach Ende der Zudosierung des Monomers und der Lösung 2 wird solange weitergerührt, bis das Temperaturmaximum überschritten ist. Danach wird langsam bei einer Temperatur unterhalb von 85 °C eine Mischung der Komponenten 11 und 12 zugesetzt. Nach ca. 10 Min. wird die Lösung 3 innerhalb von 15 Min. zudosiert. Dabei steigt die Reaktionstemperatur noch einmal auf ca. 90 °C an und wird 30 Min. bei dieser Temperatur gehalten.
Danach wird die Lösung auf ca. 60 °C abgekühlt. Die Polymerisationsreaktion ist damit beendet.

### Klebstoffdispersion:

In die noch warme Reaktionslösung werden langsam (soweit vorhanden) die Komponenten 16, 17, 18 nacheinander zugegeben und für 30 Min. gerührt. Danach wird 19, 20 und 21 zugesetzt, gerührt und homogenisiert und auf eine Temperatur < 30 °C abgekühlt.

| | Versuch I | Versuch II | Versuch III | Versuch IV |
|---|---|---|---|---|
| | | | | |
| Festkörper | 64,79% | 67,1 % | 65,8% | 67,0% |
| pH-Wert | 5,7 | 6,3 | 6,4 | 6,3 |
| Viskosität (mPas) | 3750 | 11500 | 10000 | 10500 |

Die Klebstoffe weisen nach dem Auftragen auf Papier und nach Trocknung eine glänzende und glatte Oberfläche auf. Die Benetzbarkeit bei Wiederbefeuchtung ist gut.

Ein Test auf Verblockung wurde durchgeführt. Dabei ist eine Verblockung bis zu einer Feuchtigkeit von 75 % nicht zu beobachten.
Die Dispersion ist bei Raumtemperatur auch bei geringer Viskosität über mehr als 8 Wochen zu lagern, ohne dass sich Füllstoffteilchen absetzen.

## Patentansprüche

1. Gummierklebstoff enthaltend eine wässrige füllstoffhaltige Polymerdispersion umfassend Wasser, mindestens einen Füllstoff, mindestens ein (Co)Polymeres auf der Basis von olefinisch ungesättigten Monomeren, **dadurch gekennzeichnet, dass** das (Co)Polymere in Gegenwart eines Stärkeetherderivats und/oder Celluloseetherderivats als Schutzkolloid in Gegenwart des Füllstoffs polymerisiert wurde.

2. Gummierklebstoff nach Anspruch 1, **dadurch gekennzeichnet, dass** die Polymerdispersion frei von Polyvinylalkohol ist.

3. Gummierklebstoff nach einem der Ansprüche 1 und 2, **dadurch gekennzeichnet, dass** das Schutzkolloid ein nichtionisches Stärkederivat ist, insbesondere Hydroxyalkylstärke oder -dextrin.

4. Gummierklebstoff nach einem der Ansprüche 1 bis 3, **dadurch gekennzeichnet, dass** das (Co)Polymer ein nicht wasserlösliches PVAc- Homo- oder Copolymer ist.

5. Gummierklebstoff nach einem der Ansprüche 1 bis 4, **dadurch gekennzeichnet, dass** die Füllstoffe anorganische plättchenförmige Füllstoffe mit einer Teilchengröße zwischen 0,1 bis 5 µm sind.

6. Gummierklebstoff nach Anspruch 1, **dadurch gekennzeichnet, dass** die Füllstoffe in einer Menge von 1 Gew.% bis 40 Gew.% und die Stärkeether- und/oder Celluloseetherderivate in einer Menge von 3 Gew.% bis 30 Gew.% enthalten sind.

7. Verwendung einer füllstoffhaltigen Polymerdispersion als Gummierklebstoff zur Papierbeschichtung, wobei diese Wasser, mindestens einen Füllstoff, mindestens ein (Co)Polymeres sowie ggf. weitere Additive enthält, wobei das Polymer in Gegenwart eines Stärkeetherderivats und/oder Celluloseetherderivats als Schutzkolloid in Gegenwart des Füllstoffs durch radikalische Polymerisation erhalten wurde

8. Verfahren zur Herstellung eines wässrigen Gummierklebstoffs nach einem der Ansprüche 1 bis 6, **dadurch gekennzeichnet, dass** mindestens ein Füllstoff in Gegenwart eines Stärkeetherderivats und/oder Celluloseetherderivats in eine wässrige Dispersion überführt wird, zu dieser Monomere und Initiator zugegeben werden und die Polymerisation durchgeführt wird, und vor oder nach der Polymerisation weitere Additive und Zusatzstoffe zugegeben werden können.

## Claims

1. A gum adhesive containing an aqueous filler-containing polymer dispersion, comprising water, at least one filler, at least one (co)polymer based on olefinic unsaturated monomers, **characterized in that** the (co)polymer was polymerized in the presence of a starch ether derivative and/or a cellulose ether derivative as a protective colloid in the presence of the filler.

2. The gum adhesive according to claim 1, **characterized in that** the polymer dispersion is free of polyvinyl alcohol.

3. The gum adhesive according to any claims 1 and 2, **characterized in that** the protective colloid is a non-ionic starch derivative, in particular hydroxyalkyl starch or hydroxyalkyl dextrin.

4. The gum adhesive according to any claims 1 to 3, **characterized in that** the (co)polymer is a non-water-soluble PVAc homo- or co-polymer.

5. The gum adhesive according to any claims 1 to 4, **characterized in that** the fillers are inorganic plate-like fillers with a particle size between 0.1 to 5 µm.

6. The gum adhesive according to claim 1, **characterized in that** the fillers are contained in an amount from 1% by weight to 40% by weight and the starch ether or cellulose ether derivatives are contained in an amount from 3% by weight to 30% by weight.

7. The use of a filler-containing polymer dispersion as a gum adhesive for a paper coating, wherein this dispersion contains water, at least one filler, at least one (co)polymer as well as optionally further additives, wherein the polymer was obtained by radical polymerization in the presence of a starch ether derivative and/or a cellulose ether derivative as a protective colloid in the presence of the filler.

8. A method for preparing an aqueous gum adhesive according to any of claims 1 to 6, **characterized in that** at least one filler is transferred into an aqueous dispersion in the presence of a starch ether derivative and/or a cellulose ether derivative, monomers and initiators are added thereto and the polymerization is carried out, and further additives and admixtures may be added before or after the polymerization.

## Revendications

1. Colle de gommage contenant une dispersion polymère aqueuse contenant une ou plusieurs matières de charge, comprenant de l'eau, au moins une matière de charge, au moins un (co)polymère à base de monomères à insaturation oléfinique, **caractérisée en ce que** le copolymère a été polymérisé en présence d'un dérivé d'éther d'amidon et/ou d'un dérivé d'éther cellulosique à titre de colloïde de protection en présence de la matière de charge.

2. Colle de gommage selon la revendication 1, **caractérisée en ce que** la dispersion polymère est exempte d'alcool polyvinylique.

3. Colle de gommage selon l'une quelconque des revendications 1 et 2, **caractérisée en ce que** le colloïde de protection représente un dérivé d'amidon non ionique, en particulier de l'hydroxyalkylamidon ou de l'hydroxyalkyldextrine.

4. Colle de gommage selon l'une quelconque des revendications 1 à 3, **caractérisée en ce que** le (co)polymère est un homopolymère ou un copolymère de PVAc insoluble dans l'eau.

5. Colle de gommage selon l'une quelconque des revendications 1 à 4, **caractérisée en ce que** les matières de charge représentent des matières de charge inorganiques en forme de plaquettes dont la granulométrie s'élève entre 0,1 et 5 µm.

6. Colle de gommage selon la revendication 1, **caractérisée en ce que** les matières de charge sont présentes en une quantité de 1 % en poids à 40 % en poids et les dérivés d'éther d'amidon et/ou d'éther cellulosique sont présents en une quantité de 3 % en poids à 30 % en poids.

7. Utilisation d'une dispersion polymère contenant une ou plusieurs matières de charge, à titre de colle de gommage pour le revêtement du papier, ladite dispersion contenant de l'eau, au moins une matière de charge, au moins un (co)polymère et, si on le souhaite, d'autres additifs, le polymère étant obtenu par polymérisation radicalaire en présence d'un dérivé d'éther d'amidon et/ou d'un dérivé d'éther cellulosique à titre de colloïde de protection, en présence de la matière de charge.

8. Procédé pour la préparation d'une colle aqueuse de gommage selon l'une quelconque des revendications 1 à 6, **caractérisé en ce qu'**on transfère au moins une matière de charge en présence d'un dérivé d'éther d'amidon et/ou d'un dérivé d'éther cellulosique dans une dispersion aqueuse, on ajoute à celle-ci des monomères et un initiateur et on met en oeuvre la polymérisation, d'autres additifs et d'autres substances d'addition pouvant être ajoutés avant ou après la polymérisation.
